Europäisches Patentamt

European Patent Office

Office européen des brevets

(19)

(11) EP 1 596 335 A2

(12) EUROPEAN PATENT APPLICATION

(43) Date of publication:
16.11.2005 Bulletin 2005/46

(51) Int Cl.7: **G06T 7/20**

(21) Application number: 05103773.7

(22) Date of filing: 05.05.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **07.05.2004 US 840817**

(71) Applicant: **VisiOprime Limited**
**Woking, Surrey GU21 7SA (GB)**

(72) Inventors:
• **Akhan, Mehmet Bilgay**
**Camberley, Surrey GU15 1JT (GB)**
• **Toreyin, Behcet Ugur**
**Ankara (TR)**
• **Aksay, Anil**
**Ankara (TR)**
• **Cetin, Ahmet Enis**
**06800 Ankara (TR)**

(74) Representative: **Brookes Batchellor**
**102-108 Clerkenwell Road**
**London EC1M 5SA (GB)**

(54) **Characterisation of motion of objects in a video**

(57) A method and system for characterizing the motion of moving objects in video is disclosed. Foreground objects temporarily stay in the video. However, a left or stopped object becomes part of the background scene and remains in the video forever. A method determines left objects or stopped objects by comparing the background image estimated from the current image of the video with the background estimated from previous images of the video. Differences therein indicates a left or stopped object. Other objects, which do not modify the background image are determined as transitory objects. If the video is in compressed form, estimating the background in the compressed data domain leads to a computationally efficient method as there is no need to decompress the video. In this case, comparison of the current background scene with the previous background scenes can be carried out in the compressed domain.

Figure 1

**Description**

FIELD OF THE INVENTION

The present invention relates to techniques for charactering the motion of moving objects in digital video. The method and system classify if an object is in transition or it stops in the viewing range of the camera. It also detects left or stopped objects. The method and system can operate on actual or compressed data, compressed either using a block based compression scheme or a wavelet transformation based data compression technique.

BACKGROUND OF THE INVENTION

In German patent DE20001050083, IPC Class G06K9/00, filed on October 10, 2000, Plasberg describes an apparatus and a method for the detection of an object moving in the monitored region of a camera, wherein measured values are compared with reference values and an object detection reaction is triggered when the measured value deviates in a pre-determined manner from the reference value. This method is based on comparing the actual pixel values of images forming the video. Plasberg neither tries to detect left objects nor makes an attempt to use compressed images or video stream. In many real-time applications, it is not possible to use uncompressed video due to available processor power limitations.

In US patent 5,926,231, class 348,699, filed on December 9, 1996, Jung describes a method where motion vectors of small image blocks are determined between the current frame and the preceding frame using the actual image data. The system described in this patent computes the motion of small blocks not moving objects. In addition, it cannot estimate the motion in the compressed domain.

In US patent 6,141,435, class 382/104 filed on July 23, 1996, Naoi *et al*, describes a method which classifies moving objects according to their motion. In this system several background images are estimated from the video and speeds of moving objects are determined by taking the difference of the current image and estimated background images. The system described in this patent did not consider characterizing the motion of moving objects in the compressed data domain and cannot estimate the motion in the compressed domain. Thus it cannot classify the motion of moving objects from the compressed video data.

In US Patent 6,025,879, class 375,240.24, filed on 15 February 2000, Yoneyama *et al*, describes a system for detecting a moving object in a moving picture, which can detect moving objects in block based compression schemes without completely decoding the compressed moving picture data. Yoneyama's method works only in block based coding schemes, which divide images into small blocks and compress the image and video block by block. The method is based on the so-called motion vectors characterizing the motions of blocks forming each image. Yoneyama's approach restricts the accuracy of motion calculation to the pre-defined blocks and makes no attempt to reduce the amount of processing required by ignoring the non-moving background parts. Therefore it is a different approach than our approach which characterizes the moving objects. In addition the scheme makes no attempt to estimate a background image from video to characterize the motion of moving objects.

In US Patent 5,991,428 class 382 107, filed on 23 November 1999, Taniguchi *et al*, describe a moving object detection apparatus including a movable input section to input a plurality of images in a time series, in which a background area and a moving object are included. A calculation section divides each input image by unit of predetermined area, and calculates the moving vector between two images in a time series and a corresponding confidence value of the moving vector by unit of the predetermined area. A background area detection section detects a group of the predetermined areas, each of which moves almost equally as the background area from the input image according to the moving vector and the confidence value by unit of the predetermined area. A moving area detection section detects the area other than the background area as the moving area from the input image according to the moving vector of the background area. This method is also based on comparing the actual pixel values of images forming the video and there is neither an attempt to detect left objects in video nor use compressed images nor compressed video stream for background estimation.

In the survey article by Wang *et al* published in the Internet web page: http://vision.poly.edu:8080/~avetro/pub.html, motion estimation and detection methods in compressed domain are reviewed. All of the methods are developed for detecting motion in Discrete Cosine Transform (DCT) domain. DCT coefficients neither carry time nor space information. In DCT based image and video coding, DCT of image blocks are computed and motion of these blocks are estimated. Therefore these methods restrict the accuracy of motion calculation to the pre-defined blocks. These methods do not take advantage of the fact that wavelet transform coefficients contain spatial information about the original image. Therefore, they cannot be used in video compressed using a wavelet transform. The methods and systems described in this article try to detect stopped objects or left objects by examining the motion vectors of moving objects in video. Our approach is different from other approaches in the sense that we characterize the motion of moving objects by examining the background scene estimated from the video.

The present invention addresses such a need.

## SUMMARY OF THE INVENTION

A method and system for characterizing the motion of moving objects in digital video is disclosed. A typical video scene contains foreground and background objects. Foreground objects temporarily stay in the video. However, a stopped object or a left object becomes a part of the background scene and remains in the viewing range of the camera. It is determined if an object is in transition or it stops within the viewing range of the camera by examining the background scene estimated from the video. Left objects are also detected. Other methods characterize moving objects by examining the motion vectors of moving objects in video. The approach in accordance with the present invention is different from other approaches in the sense that it is determined if an object is transitory or remains in video by estimating the background scene.

A method and system in accordance with the present invention determines left or stopped objects from a digital video. A plurality of images are inputted to the system in time series. A method and system determines the left objects by comparing the background image estimated from the current image of the video with the background estimated from previous images of the video. A difference between the current and previous background images indicates a left object. Other objects, which do not modify the background scene are determined a transitory objects. In a preferred embodiment, the matter and system is implemented in compressed data domain. In other words, the method and system determines left objects from digital video in compressed form. Background scene of a video can be estimated using the compressed video data as well. If the video is in compressed form, estimating the compressed form of the background in the compressed data domain leads to a computationally efficient method as there is no need to decompress the video. Other objects, which do not modify the background scene in compressed data domain are considered as transitory objects. In this case, comparison of the current background scene with the previous estimates of the background scene can be carried out in the compressed domain.

The present invention provides several methods and apparatus for characterizing the motion of moving objects in video represented in ordinary form or encoded using a data compression algorithm without performing data decompression.

## BRIEF DESCRIPTION OF THE DRAWINGS

Figure 1 is a block diagram illustrating the present invention for characterizing the motion of moving regions in an image sequence forming a video by comparing the current image with the background image estimated from the current and past images of the video.

Figure 2 is a diagrammatic illustration of the transformation of an original image into a one-level wavelet transformed image.

Figure 3 is a diagrammatic illustration of the transformation of a portion of an original image into three levels using a wavelet transform.

Figure 4 is a block diagram illustrating the present invention for characterizing the motion of moving regions in wavelet compressed video by comparing the wavelet transform of the current image with the wavelet transform of background image estimated from the current and past images of the video.

## DETAILED DESCRIPTION

The present invention relates to techniques for charactering the motion of moving objects in digital video. The following description is presented to enable one of ordinary skill in the art to make and use the invention and is provided in the context of a patent application and its requirements. Various modifications to the preferred embodiment and the generic principles and features described herein will be readily apparent to those skilled in the art. Thus, the present invention is not intended to be limited to the embodiment shown but is to be accorded the widest scope consistent with the principles and features described herein.

The present invention relates to techniques for characterizing the motion of moving objects in digital video. The video can be either compressed or uncompressed form. The invention can provide solution to many interesting problems including detection of stopped or stalled cars in highway surveillance videos, and detection of left parcels and luggage in train stations and airports.

Several embodiments and examples of the present invention are described below. While particular applications and methods are explained, it should be understood that the present invention can be used in a wide variety of other applications and with other techniques within the scope of the present invention.

A typical video scene contains foreground and background objects. Foreground objects temporarily stay in the video. However, a stopped object or a left object becomes a part of the background scene and remains in the viewing range of the camera. We determine if an object is in transition or it stops within the viewing range of the camera by examining the background scene estimated from the video. We also detect left objects. Other methods characterize moving objects by examining the motion vectors of moving objects in video. Our approach is different from other approaches in the sense that we determine if an object is a transitory object or remains in video by estimating the background scene.

It is assumed that moving objects and regions are in the foreground of the scene. Therefore moving regions and objects can be detected by comparing the current image with the background image, which can be estimated from past images of the video including the current image. If there is a significant temporal difference between the current image frame and the background image then this means that there is motion in the video. If there is no motion then the current image and the background image ideally should be equal to each other.

Stationary pixels in the video are the pixels of the background scene because the background can be defined as temporally stationary part of the video. If the scene is observed for some time then pixels forming the entire background scene can be estimated because moving regions and objects occupy only some parts of the scene in a typical image of a video. A simple approach to estimate the background is to average the observed image frames of the video. Since moving objects and regions occupy only a part of the image they conceal a part of the background scene and their effect is cancelled over time by averaging. There are many approaches reported in the literature for estimating the background scene. Any one of these approaches can be implemented to estimate the background from the image frames forming the video. For example, in the article "A System for Video Surveillance and Monitoring," in *Proc. American Nuclear Society (ANS) Eighth International Topical Meeting on Robotics and Remote Systems*, Pittsburgh, PA, April 25-29, 1999 by Collins, Lipton and Kanade, a recursive background estimation method was reported from the actual image data. Let $I_n (x,y)$ represent a pixel in the n-th image frame In. The background image Bn+1 is estimated as follows

$$B_{n+1} (x,y) = aB_n (x,y) + (1\text{-}a)\, I_n (x,y), \qquad \text{if } I_n (x,y) \text{ is not moving}$$

$$B_{n+1} (x,y) = B_n (x,y), \qquad \text{if } I_n (x,y) \text{ is moving}$$

where $B_n (x,y)$ is the previous estimate of the background scene, the update parameter a is a positive number close to 1. A pixel $I_n (x,y)$ is assumed to be moving if

$$|I_n (x,y) - I_{n-1}(x,y)| > T_n(x,y)$$

where $T_n (x,y)$ is a threshold recursively updated for each pixel as follows

$$T_{n+1} (x,y) = aT_n (x,y) + (1\text{-}a)\, (c|I_n (x,y) - B_n (x,y)| , \qquad \text{if } I_n (x,y) \text{ is not moving}$$

$$T_{n+1} (x,y) = T_n (x,y), \qquad \text{if } I_n (x,y) \text{ is moving}$$

where c is a number greater than 1 and the update parameter a is a positive number close to 1. Initial threshold values can be experimentally determined. As it can be seen from the above equation higher the parameter c higher the threshold or lower the sensitivity of detection scheme.

It is assumed that the regions different from the background are the moving regions. Estimated background image is subtracted from the current image of the video to detect the moving regions in the video. In other words all of the pixels satisfying the inequality

$$| I_n (x,y) - B_n(x,y)| > T_n(x,y) \qquad \textit{Inequality 1}$$

are determined. These pixels are the pixels of moving objects.

The background images Bn+1 and Bn-m are compared where the duration parameter m is a positive integer used to determine the change in background. The duration parameter m is determined by the user to classify if an object is moving or stopped. If there are pixels whose corresponding values significantly differ from each other in Bn+1 and Bn-m then this means that background has changed. Pixels satisfying the inequality

$$| B_{n+1} (x,y) - B_{n-m}(x,y)| > Th \qquad \textit{Inequality 2}$$

belong to left or stopped objects during the time corresponding to difference of frame indexes n - (n-m) =m. The threshold value Th is a positive number. Once all pixels satisfying *Inequality 2* are determined the union of the neighbouring pixels on the image $I_n$ is obtained to determine the left object(s) in the video. The number of left or stopped objects is equal to the number of disjoint regions obtained as a result of the union operation. If a pixel $I_n$ (x,y) satisfies the *Inequality 1* but the corresponding background pixel $B_{n+1}$ (x,y) does not satisfy the *Inequality* 2 this means that this pixel does not belong to a stopped or a left object. It is the pixel of a moving object in transition at time n. The union of the neighbouring pixels satisfying *Inequality 1* on the image $I_n$ is determines the moving object(s) in the video. Similarly, the number of moving objects is equal to the number of disjoint regions obtained as a result of the union operation.

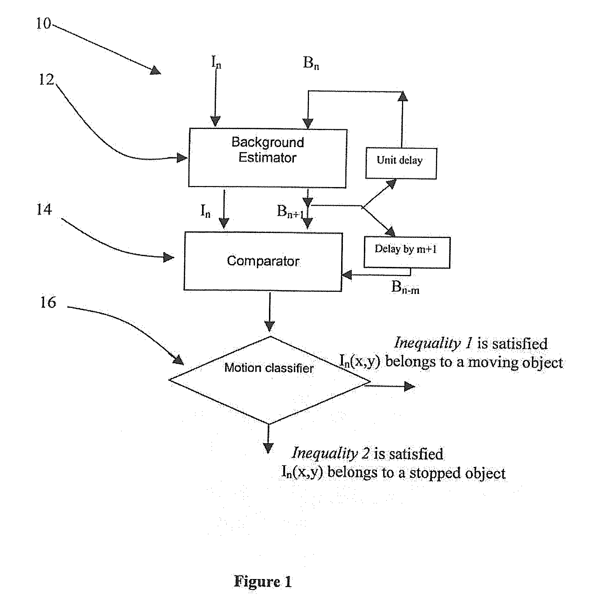

FIGURE 1 is a block diagram 10 illustrating the present invention for characterizing the motion of moving objects in a video consisting of a sequence of images. The block diagrams and flow diagrams illustrated herein are preferably implemented using software on any suitable general-purpose computer or the like, having microprocessor, memory, and appropriate peripherals, where the software is implemented with program instructions stored on a computer readable medium (memory device, CDROM or DVDROM, magnetic disk, etc). The block diagrams and methods can alternatively be implemented using hardware (logic gates, etc) or a combination of hardware and software.

The current image frame $I_n$ and estimated background image $B_n$ are input to a background estimating system 12 which determines the next estimate $B_{n+1}$ as described above. This system may have a memory and may use not only $I_n$ but also other past frames $I_{n-k}$ , k=1,2,... The comparator 14 may simply take the difference of $I_n$ and $B_n$ and the difference of $B_{n+1} - B_{n-m}$ to determine if there is a change in pixel values. Pixels satisfying *Inequalities 1* and *2* are determined. The motion classifier 16 determines if a pixel belongs to a moving object or a left object. If the Inequality 2 is satisfied at the pixel location (x,y) then the corresponding pixel $I_n$ (x,y) belongs to stopped or a left object. If a pixel $I_n$ (x,y) satisfies the *Inequality 1* but the corresponding background pixel $B_{n+1}$ (x,y) does not satisfy the *Inequality 2* this means that this pixel does not belong to a stopped or a left object. It is the pixel of a moving object in transition at time n.

Above arguments are valid in compressed data domain as well. Let us first assume that the video is compressed using a wavelet transform based coder. The wavelet transform of the background scene can be estimated from the wavelet coefficients of past image frames, which do not change in time, whereas foreground objects and their wavelet coefficients change in time. Such wavelet coefficients belong to the background because the background of the scene is temporally stationary. Non-stationary wavelet coefficients over time correspond to the foreground of the scene and they contain motion information. If the viewing range of the camera is observed for some time then the wavelet transform of the entire background can be estimated because moving regions and objects occupy only some parts of the scene in a typical image of a video and they disappear over time.

Wavelet transforms have substantial advantages over conventional Fourier transforms for analyzing nonlinear and non-stationary time series because wavelet transform contains both time and frequency information whereas Fourier Transform contains only frequency information of the original signal. These transforms are used in a variety of applications, some of which include data smoothing, data compression, and image reconstruction, among many others. US patents 5,321,776, and 5,495,292 are examples of image and video coding methods using wavelet transform. In addition, the so-called JPEG2000 image compression standard (ISO/IEC 15444-1:2000) is also based on wavelet transform. A video consisting of a plurality of images can be encoded using JPEG2000 standard by compressing each image of the video using JPEG2000 standard.

Wavelet transforms such as the Discrete Wavelet Transform (DWT) can process a signal to provide discrete coefficients, and many of these coefficients can be discarded to greatly reduce the amount of information needed to describe the signal. The DWT can be used to reduce the size of an image without losing much of the resolution. For example, for a given image, the DWT of each row can be computed, and all the values in the DWT that are less then a certain threshold can be discarded. Only those DWT coefficients that are above the threshold are saved for each row. When the original image is to be reconstructed, each row can be padded with as many zeros as the number of discarded coefficients, and the inverse Discrete Wavelet Transform (IDWT) can be used to reconstruct each row of the original image. Or, the image can be analyzed at different scales corresponding to various frequency bands, and the original image reconstructed by using only the coefficients that are of a particular band.

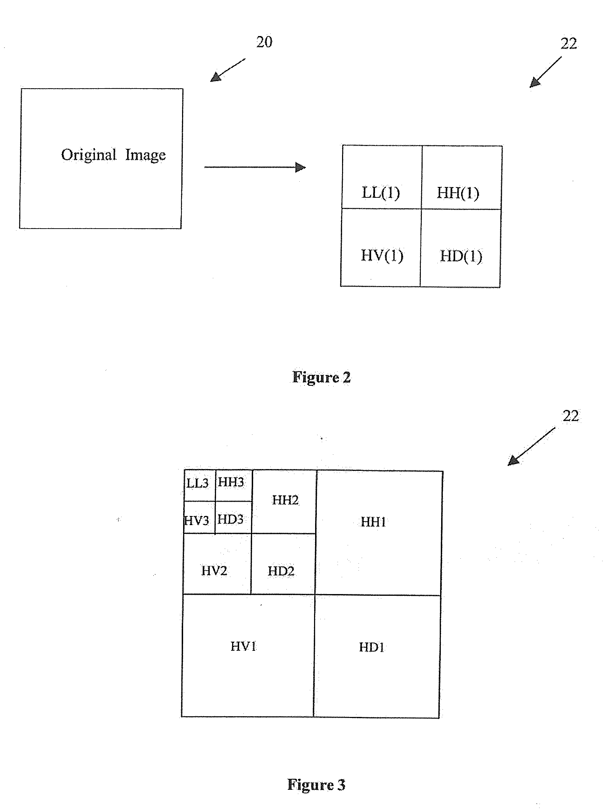

FIGURE 2 illustrates the transformation of an original image 20 of the video into a one-level sub-sampled image 22. Wavelet transforms can decompose an original image into sub-images in various scales each sub-image representing a frequency subset of the original image. Wavelet transforms use a bank of filters processing the image pixels to decompose the original image into high- and low-frequency components. This operation can be successively applied to decompose the original image into a low-frequency, various medium-band frequency, and highfrequency components. After each stage of filtering data can be sub-sampled without losing any information because of the special nature of the wavelet filters. One level of two-dimensional dyadic wavelet transform creates four sub-sampled separate quarters, each containing different sets of information about the image. It is conventional to name the top left quarter Low-Low (LL) - containing low frequency horizontal and low frequency vertical information; the top right quarter High-Horizontal (HH) - containing high frequency horizontal information; the bottom left quarter High-Vertical (HV) - containing high frequency vertical information; and the bottom right quarter High-Diagonal (HD) - containing high frequency diagonal information. The level of transform is denoted by a number suffix following the two-letter code. For example, LL(1) refers to the first level of transform and denotes the top left corner of the sub-sampled image 22 by a factor of two in both horizontal and vertical dimensions.

Typically, wavelet transforms are performed for more than one level. FIGURE 3 illustrates further transforms that have been performed on the LL quarter of the sub-sampled image 22 to create additional sub-sampled images. The second transform performed on the LL(1) quarter produces four second level quarters within the LL(1) quarter which are similar to the first level quarters, where the second level quarters are labelled as LL(2) (not shown), HH(2), HD(2), and HV(2). A third transform performed on the LL(2) quarter produces four third level quarters labelled as LL(3), HH(3), HD(3), and HV(3). Additional transforms can be performed to create sub-sampled images at lower levels. A hierarchy of sub-sampled images from wavelet transforms, such as the three levels of transform shown in FIGURE 3, is also known as a "wavelet transform tree." A typical three scale discrete wavelet transform (DWT) of the image I is defined as WI={LL(3), HH(3), HD(3), HV(3),HH(2), HD(2), HV(2), HH(1), HD(1), HV(1)}. The DWT of the image I may be defined to contain LL(1) and LL(2) as well. In fact the so-called sub-band images LL(3), HH(3), HD(3), and HV(3) uniquely define the sub-band image LL(2), and LL(2), HH(2), HD(2), and HV(2) uniquely define the so-called low-low image LL(1).

In wavelet transform based image encoders many of the small valued wavelet coefficients are discarded to reduce the amount of data to be stored. When the original image is to be reconstructed the discarded coefficients are replaced with zeros. A video is composed of a series of still images (frames) that are displayed to the user one at a time at a specified rate. Video sequences can take up a lot of memory or storage space when stored, and therefore can be compressed so that they can be stored in smaller spaces. In video data compression, each image frame of the video can be compressed using a wavelet coder. In addition, some portions of image frames or entire frames can be discarded especially when an image frame is positioned between two other frames in which most of the features of these frames remain unchanged.

If the video data is stored in wavelet domain then the present invention compares the WT of the current image with the wavelet transforms of the near future and past image frames to detect motion and moving regions in the current image without performing an inverse wavelet transform operation. Moving regions and objects can be detected by comparing the wavelet transforms of the current image with the wavelet transform of the background scene which can be estimated from the wavelet transforms of the current frame and past image frames. If there is a significant difference between the two wavelet transforms then this means that there is motion in the video. If there is no motion then the wavelet transforms of the current image and the background image ideally should be equal to each other.

The wavelet transform of the background scene can be estimated from the wavelet coefficients of past image frames, which do not change in time, whereas foreground objects and their wavelet coefficients change in time. Such wavelet coefficients belong to the background because the background of the scene is temporally stationary. Non-stationary wavelet coefficients over time correspond to the foreground of the scene and they contain motion information. If the viewing range of the camera is observed for some time then the wavelet transform of the entire background can be estimated because moving regions and objects occupy only some parts of the scene in a typical image of a video and they disappear over time.

The wavelet transform of the background scene can be estimated from the wavelet coefficients, which do not change in time. Stationary wavelet coefficients are the wavelet coefficients of background scene because background can be defined as temporally stationary part of the video. If the scene is observed for some time then the wavelet transform of the entire background scene can be estimated because moving regions and objects occupy only some parts of the scene in a typical image of a video. A simple approach to estimate the wavelet transform of the background is to average the observed wavelet transforms of the image frames. Since moving objects and regions occupy only a part of the image they can conceal a part of the background scene and their effect in the wavelet domain is cancelled over time by averaging.

Any one of the space domain approaches for background estimation can be implemented in wavelet domain. For example, the method of Collins *et al* reviewed above can be implemented by simply computing the wavelet transform of both sides of estimation equations:

$$WB_{n+1}(x,y) = aWB_n(x,y) + (1-a) WI_n(x,y), \quad \text{if } WI_n(x,y) \text{ is not moving}$$

$$WB_{n+1}(x,y) = WB_n(x,y), \quad \text{if } WI_n(x,y) \text{ is moving}$$

where $WI_n$ is the wavelet transform of the image frame $I_n$ and $WB_n$ is an estimate of the DWT of the background scene at time instant n, the update parameter *a* is a positive number close to 1. Initial wavelet transform of the background can be assumed to be the wavelet transform of the first image of the video. A wavelet coefficient $WI_n(x,y)$ is assumed to be moving if

$$|WI_n(x,y) - WI_{n-1}(x,y)| > T_n(x,y)$$

where $T_n(x,y)$ is a threshold recursively updated for each wavelet coefficient as follows

$$T_{n+1}(x,y) = aT_n(x,y) + (1-a) (b|WI_n(x,y) - WB_n(x,y)|, \quad \text{if } WI_n(x,y) \text{ is not moving}$$

$$T_{n+1}(x,y) = T_n(x,y), \quad \text{if } WI_n(x,y) \text{ is moving}$$

where *b* is a number greater than 1 and the update parameter *a* is a positive number close to 1. Initial threshold values can be experimentally determined. As it can be seen from the above equation higher the parameter b higher the threshold or lower the sensitivity of detection scheme.

Estimated DWT of the background is subtracted from the DWT of the current image of the video to detect the moving wavelet coefficients and consequently moving objects as it is assumed that the regions different from the background are the moving regions. In other words all of the wavelet coefficients satisfying the inequality

$$| WI_n(x,y) - WB_n(x,y)| > T_n(x,y) \qquad \textit{Inequality 3}$$

are determined.

The wavelet transforms $WB_{n+1}$ and $WB_{n-m}$ of background images $B_{n+1}$ and $B_{n-m}$ are compared to determine the change in background. The duration parameter m is determined by the user to classify if an object is moving or stopped as discussed before. If there are wavelet coefficients whose values significantly differ from each other in $WB_{n+1}$ and $WB_{n-m}$ then this means that background has changed. Wavelet coefficients satisfying the inequality

$$|WB_{n+1}(x,y) - WB_{n-m}(x,y)| > T_h \qquad \textit{Inequality 4}$$

belong to left or stopped objects during the time corresponding to difference of frame indexes n - (n-m) =m. The threshold value $T_h$ is a positive number which may be different from the threshold value used in *Inequality* 2. It can also recursively determined as the threshold used in *Inequality 3.*

Once all the wavelet coefficients satisfying the above inequalities are determined locations of corresponding regions on the original image are determined. If a single stage Haar wavelet transform is used in data compression then a wavelet coefficient satisfying *Inequality 3* corresponds to a two by two block in the original image frame $I_n$. For example, (x,y)-th coefficient of the sub-band image $HD_n(1)$ (or other sub-band images $HV_n(1)$, $HH_n(1)$, $LL_n(1)$) of the current image $I_n$ satisfies *Inequality 1* then this means that there exists motion in a two pixel by two pixel region in the original image, $I_n(k,m)$, k= 2 x, 2 x -1, m = 2 y, 2 y-1 because of the sub-sampling operation in the discrete wavelet transform computation. Similarly, if the (x,y)-th coefficient of the sub-band image $HD_n(2)$ (or other second scale sub-band images $HV_n(2)$, $HH_n(2)$, $LL_n(2)$) satisfies *Inequality* 3 then this means that there exists motion in a four pixel by four pixel region in the original image, $I_n(k,m)$, k= 2x, 2x -1, 2x+1, and m = 2 y, 2y-1, 2y +1. In general a change in the 1-th level wavelet coefficient corresponds to a $2^1$ by $2^1$ region in the original image.

In other wavelet transforms the number of pixels forming a wavelet coefficient is larger than four but most of the contribution comes from the immediate neighbourhood of the pixel (k,m) = ( 2x, 2y) in the first level wavelet decomposition, and (k,m)= ($2^1$x, $2^1$ y) in 1-th level wavelet decomposition, respectively. Therefore, in other wavelet transforms we classify the immediate neighbourhood of (2x,2y) in a single stage wavelet decomposition or in general (2'x,

$2^1$ y) in 1-th level wavelet decomposition as a moving region in the current image frame, respectively.

Once all wavelet coefficients satisfying *Inequalities 3* and *4* are determined the union of the corresponding regions on the original image is obtained to locate the moving and stopped object(s) in the video. The number of moving regions or stopped objects is equal to the number of disjoint regions obtained as a result of the union operation. The number of the moving and stopped or left object(s) is estimated from the union of the image regions producing the wavelet coefficients satisfying *Inequality 3* and *Inequality 4*, respectively.

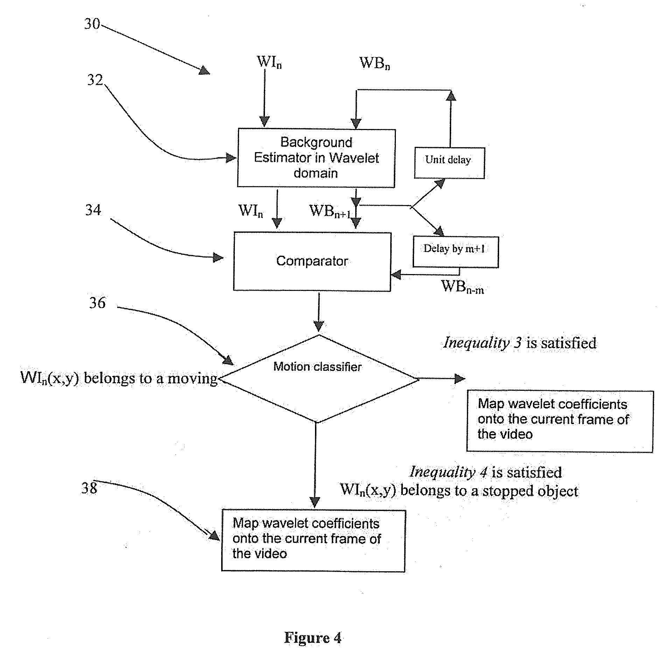

FIGURE 4 is a block diagram 30 illustrating the present invention for characterizing the motion of moving regions in wavelet compressed video. FIGURE 4 is similar to the FIGURE 1 except that the operations are carried out in the wavelet domain. Let $WI_n$ and $WB_n$ be the wavelet transforms of the current image frame In and estimated background image frame $B_n$, respectively. The wavelet transform of the current image $WI_n$ and the estimated wavelet transform of the background scene $WB_n$ are input to the background estimator in wavelet domain 32. The system 32 implements the above equations to estimate $WB_{n+1}$. The comparator 34 may simply take the difference of $WI_n$ and $WB_n$ and the difference of $WB_{n+1}$ - $WB_{n-m}$ to determine if there is a change in wavelet coefficient values. Coefficients satisfying *Inequalities 3* and *4* are determined. The motion classifier 36 determines if a pixel belongs to a moving object or a left object. If the *Inequality 4* is satisfied then the corresponding wavelet coefficient $WI_n(x,y)$ belongs to stopped or a left object. If a wavelet coefficient $WI_n (x,y)$ satisfies the *Inequality 3* but the corresponding background coefficient $WB_{n+1} (x,y)$ does not satisfy the *Inequality 4* this means that this coefficient does not belong to a stopped or a left object. It is the coefficient of a moving object in transition at time n. Once all the wavelet coefficients satisfying the above inequality are determined, locations of corresponding regions on the original image are determined 38.

In other transform based methods including the Discrete Cosine Transform (DCT) and Fourier Transform based methods transform of the background can be estimated as in the case of wavelet transform either by time-averaging of the transforms of images forming the video or by recursive estimation as described above or by other means reported in the literature. After estimation of the transform of the background image, Inequalities 1 and 2 can be realized in the transform domain to characterize the nature of the motion in video. It should be pointed out that the present invention is applicable to the video encoded using internationally-standardized coding schemes such as MPEG-1, MPEG-2, MPEG-4 and H261 which are all based on DCT and motion compensated prediction of image frames. In addition, the invention can be equally applied to video coded by other linear transforms including the Hadamard transform, Karhunen-Loeve Transform, and vector quantization, etc.

In some image and video coding methods images are divided into blocks and transforms of the blocks are computed. In this case background estimation can be carried out block by block. In addition a coarse estimate of an image frame can be obtained from the DC value of each block in DCT and Fourier Transform. Therefore a coarse estimate of the background can be also estimated from the DC coefficients of blocks forming the image. For example, if DCT is computed in 8 pixel by 8 pixel blocks then an image whose height and width are 1/8-th of the original image can be estimated from the DC coefficients. Consequently, a coarse background image whose height and width are 1/8-th of the actual background image can be estimated from the DC coefficients as well. As described above Inequalities 1 and 2 can be realized according to the new image size and the motion of moving objects can be characterized.

In vector quantization based image and video coding blocks forming an image frame are quantized. In this case, background image can be estimated over the quantized image blocks.

A background image can be also estimated from blocks, which do not move or equivalently from blocks whose motion vectors are below a threshold. If the camera capturing the video moves then the motion of the camera must be compensated to determine the blocks, which do not move. Widely used transforms, DCT and Discrete Fourier Transform are linear transforms, and coefficients obtained after transformation operation can be real or complex number depending on the nature of the transform. Differencing and addition operations described above for background estimation can be implemented using transform domain coefficients inside blocks in the compressed data domain. In vector quantisation, coefficients of the vector quatized blocks are real and they are pixels or pixel-like quantities. Differencing and addition operations described above for background estimation can be implemented using the coefficients of the vector quantized blocks.

Although the present invention has been described in accordance with the embodiments shown, one of ordinary skill in the art will readily recognize that there could be variations to the embodiments and those variations would be within the spirit and scope of the present invention. For example, although the present invention is described in the context of a frame being divided into four quadrants, or quarters, or sub-images in each level of wavelet decomposition one of ordinary skill in the art recognizes that a frame could be divided into any number of sub-sections and still be within the spirit and scope of the present invention. Accordingly, many modifications may be made by one of ordinary skill in the art without departing from the spirit and scope of the appended claims.

**Claims**

1.  A method for **characterizing** the motion of moving objects and regions in compressed video comprises:

    comparing the compressed form of the current image of the video with the estimated compressed form of the background scene, wherein a difference between the compressed form of a current background scene and the compressed form of a past background scene estimated in compressed data domain indicate the existence of at least one stopped object wherein a difference between the current image and a current background image in compressed data domain indicate the existence of at least one object in transition and wherein the nature of the motion or the presence of a left or stopped object in the video is determined without performing data decompression operation.

2.  The method of claim 1 wherein the compression of the current image and the background image can be a wavelet, Fourier or Discrete Cosine Transform (DCT) or any other linear transform based method, wherein the nature of the motion or the presence of a left or stopped object in the video is determined without performing inverse transformation operation.

3.  The method of claim 1 wherein the data compression method comprises a block based method including DCT and vector quantisation based methods, and methods performing transformations in blocks of data forming image frames, wherein the nature of the motion or the presence of a left or stopped object in the video is determined without performing decompression operation.

4.  The method of claim 1, wherein said comparing step comprises matching the predetermined area in the wavelet transform of one image with the predetermined area in the wavelet transform of the next image by shifting as one unit in the wavelet domain, calculating the difference of wavelet coefficient values between the predetermined area in the wavelet transform of the one image and each matched area of the wavelet transform of the next image, and calculating an evaluation value of the difference of the wavelet coefficient value.

5.  The method of claim 1 wherein the threshold values determining the moving wavelet coefficients are estimated in a recursive manner from the threshold value used in previous comparison, and difference of the previous value of the wavelet coefficient and estimated wavelet coefficient of the background in wavelet compressed video, wherein the system updates the threshold values by itself without requiring any predefined threshold values except an initial threshold value.

6.  The method of claim 1 wherein the locations of moving objects on the original image data domain are estimated by determining the indices of the image pixels producing the wavelet coefficients of the current image frame differing from the wavelet coefficients of the estimated background in wavelet compressed video.

7.  The method of claim 1 wherein the locations of left or stopped objects on the original image data domain are estimated by determining the indices of the background image pixels producing the wavelet coefficients of the current background image differing from the wavelet coefficients of a past background image in wavelet compressed video.

8.  The method of claim 1 wherein block based compression schemes employ are of a DCT, Discrete Fourier or any other linear transform, and a coarse form of the background image can be estimated from the DC coefficients of transformed image blocks.

9.  The method of claim 8 wherein a background estimation scheme employing DC coefficients of transformed image blocks is utilized.

10. The method of claim 1 wherein a block based video coding scheme is utilized, and a compressed form of the background image can be estimated from blocks which do not move or equivalently from blocks whose motion vectors are below a threshold.

11. The method of claim 10, a compressed form of the background image estimated from compressed form of image blocks, which do not move over time is utilized.

12. The method of claim 11 wherein a video compression schemes employs a DCT, Discrete Fourier or any other linear transform, and a compressed form of the background image can be estimated by averaging the transform domain data over time.

13. The method of claim 1 wherein a background estimation scheme by averaging the transform domain data over time is utilized.

14. A computer readable medium containing program instructions for carrying out the method of any one of claims 1 to 13.

10

$I_n$        $B_n$

12

Background
Estimator

Unit delay

$I_n$        $B_{n+1}$

14

Comparator

Delay by m+1

$B_{n-m}$

16

Motion classifier

*Inequality 1* is satisfied
$I_n(x,y)$ belongs to a moving object

*Inequality 2* is satisfied
$I_n(x,y)$ belongs to a stopped object

**Figure 1**

20

22

Original Image → 

| LL(1) | HH(1) |
|-------|-------|
| HV(1) | HD(1) |

**Figure 2**

22

| LL3 | HH3 | HH2 | HH1 |
|-----|-----|-----|-----|
| HV3 | HD3 | | |
| HV2 | | HD2 | |
| HV1 | | HD1 | |

**Figure 3**

30

$WI_n$          $WB_n$

32

Background
Estimator in Wavelet
domain

Unit delay

34

$WI_n$          $WB_{n+1}$

Comparator

Delay by m+1

$WB_{n-m}$

36

*Inequality 3* is satisfied

$WI_n(x,y)$ belongs to a moving

Motion classifier

Map wavelet coefficients
onto the current frame of
the video

*Inequality 4* is satisfied
$WI_n(x,y)$ belongs to a stopped object

38

Map wavelet coefficients
onto the current frame of
the video

**Figure 4**